# EUROPEAN PATENT APPLICATION

(11) **EP 2 190 251 A1**
(43) Date of publication of application: **26.05.2010**
(21) Application number: 09006549.1
(22) Date of filing: 14.05.2009
(51) Int. Cl.: H04W 74/08

(54) **Methods utilized in mobile devices and base stations, and mobile devices and base stations thereof, for optimizing random access procedures**

(30) Priority: 20.11.2008 US 275189
(71) Applicant: HTC Corporation, Taoyuan City Taoyuan County (TW)
(72) Inventor: Wu, Chih-Hsiang, Taoyuan County (TW)
(74) Representative: Hager, Thomas Johannes

(57) **Abstract**

A method utilized in a mobile device (110) includes: transmitting a broadcasted random access (RA) preamble to a base station (105a) for initiating a first RA procedure; receiving a dedicated RA preamble from the base station (105a) after the first RA procedure is initiated; and transmitting the dedicated RA preamble to the base station (105a) for initiating a second RA procedure.

## Description

The present invention relates to methods utilized in mobile devices and base stations, and the mobile devices and base stations thereof.

A long-term evolution (LTE) system, initiated by the third generation partnership project (3GPP), is now being regarded as a new radio interface and radio network architecture that provides a high data rate, low latency, packet optimization, and improved system capacity and coverage. In the LTE system, an evolved universal terrestrial radio access network (E-UTRAN) includes a plurality of evolved Node-Bs (eNBs) and communicates with a plurality of mobile stations, also referred as user equipments (UEs).

In LTE system, if a mobile device such as a mobile phone desires to connect to the Internet or communicate with other mobile phones via the LTE system, the mobile device firstly needs to be synchronized with a base station that serves the mobile device. The purpose of being synchronized with the base station is to prevent signals transmitted from the mobile device from colliding with other signals sent from other mobile devices under the coverage of the base station. Particularly, when the mobile device is not synchronized with the base station on uplink in RRC_CONNECTED state, the collision between downlink data arrival and uplink data transmission is usually introduced and may result in that available dedicated preambles are not enough.

This in mind, the present invention aims at providing a method that appropriately utilizes a dedicated RA preamble for initiating a random access (RA) procedure and related mobile device. In addition, the present invention aims at providing a method that appropriately releases a dedicated RA preamble and related base station thereof. Furthermore, the present invention aims at providing a method that appropriately transmits a scheduling request message to a base station, and related mobile device. Moreover, the present invention aims at providing a method that transmits a control message including a UL grant and related base station thereof.

This is achieved by methods according to claims 1, 3 and 4, and mobile devices and base stations according to claims 7 and 11, and 12 and 15. The respective dependent claims pertain to corresponding further development and improvements.

As will be seen more clearly from the detailed description following below, the method utilized in a mobile device includes transmitting a broadcasted random access (RA) preamble to a base station for initiating a first RA procedure, receiving a dedicated RA preamble from the base station after the first RA procedure is initiated, and transmitting the dedicated RA preamble to the base station for initiating a second RA procedure.

Additionally, the method utilized in a base station includes receiving a broadcasted random access (RA) preamble used to initiate an RA procedure from a mobile device, assigning a dedicated RA preamble to the mobile device, transmitting an RA response corresponding to the broadcasted RA preamble to the mobile device and then receiving a scheduled transmission including a cell radio network temporary identity (C_RNTI) from the mobile device, and releasing the dedicated RA preamble when the C_RNTI or a media access control protocol data unit (MAC PDU) from the mobile device is received.

Furthermore, the method utilized in a mobile device, wherein the method includes transmitting an random access (RA) preamble to a base station, receiving a control message including downlink (DL) data arrival from the base station, transmitting a scheduled transmission message to the base station when an RA response from the base station is received and then starting a contention resolution timer, and transmitting a scheduling request message to the base station before the contention resolution timer expires.

Moreover, the method utilized in a base station, wherein the method includes determining whether a random access (RA) preamble is used for uplink (UL) data transmission and sending a control message including a UL grant to the mobile device when the RA preamble is considered to be used for UL data transmission.

The mobile device includes a communication unit for communicating with a base station and a control unit for controlling the communication unit. The control unit controls the communication unit to transmit a broadcasted random access (RA) preamble to a base station for initiating a first RA procedure. The communication unit receives a dedicated RA preamble from the base station after the first RA procedure is initiated. The control unit controls the communication unit to transmit the dedicated RA preamble to the base station for initiating a second RA procedure.

The base station includes a communication module and a control module. The communication module is used for communicating with a mobile device, and the control module is used for controlling the communication module. The communication module receives a broadcasted random access (RA) preamble used to initiate an RA procedure from the mobile device. The control module controls the communication module to assign a dedicated RA preamble to the mobile device. The communication module transmits an RA response corresponding to the broadcasted RA preamble to the mobile device and then receives a scheduled transmission including a cell radio network temporary identity (C_RNTI) from the mobile device. The control module releases the dedicated RA preamble when the C_RNTI or a media access control protocol data unit (MAC PDU) from the mobile device is received by the communication module.

The mobile device includes a communication unit for communicating with a base station and a control unit for controlling the communication unit. The control unit controls the communication unit to transmit a random access (RA) preamble to the base station; the communication unit receives a control message including downlink (DL) data arrival from the base station. The control unit controls the communication unit to transmit a scheduled transmission message to the base station when an RA response from the base station is received and then starts a contention resolution timer. The control unit controls the communication unit to transmit a scheduling request message to the base station before the contention resolution timer expires.

The base station includes a communication module for communicating with a mobile device and a control module for controlling the communication module to communicate with the mobile device. The control module determines whether a random access (RA) preamble is used for uplink (UL) data transmission, and controls the communication unit to send a control message including a UL grant to the mobile device when the RA preamble is considered to be used for UL data transmission.

In the following, the invention is further illustrated by way of example, taking reference to the accompanying drawings. Thereof
FIG. 1 is a block diagram of a wireless communication system according to an embodiment of the present invention;
FIG. 2 is a block diagram of a user equipment (UE) and an evolved Node B (eNB) shown in FIG. 1;
FIG. 3 is a sequential diagram illustrating the interaction between the eNB and UE in FIG. 2 according to the first example of this embodiment;
FIG. 4 is a sequential diagram illustrating another interaction between the eNB and UE in FIG. 2 according to the first example of this embodiment;
FIG. 5 is a sequential diagram illustrating the interaction between the eNB and UE in FIG. 2 according to a second example of this embodiment;
FIG. 6 is a sequential diagram illustrating another interaction between the eNB and UE in FIG. 2 according to the second example of this embodiment;
FIG. 7 is a sequential diagram illustrating the interaction between the eNB and UE in FIG. 2 according to a third example of this embodiment;
FIG. 8 is a sequential diagram illustrating the interaction between the eNB and UE in FIG. 2 according to a fourth example of this embodiment; and
FIG. 9 is a sequential diagram showing an interaction between the UE and eNB shown in FIG. 2 according to a fifth example of this embodiment.

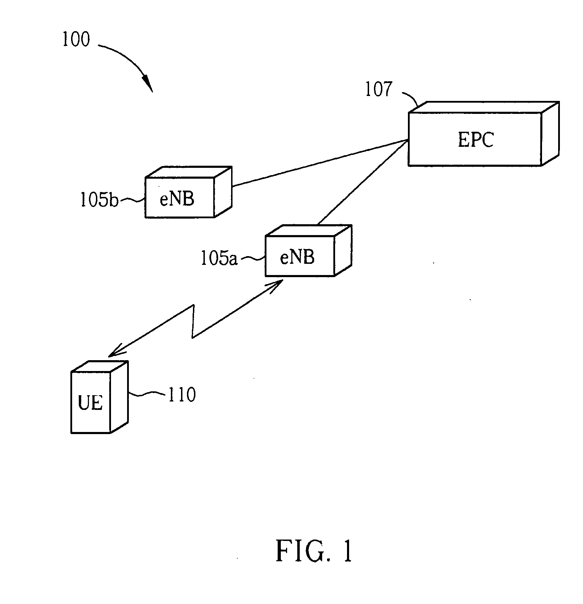

Please refer to FIG. 1. FIG. 1 is a diagram of a wireless communication system 100 such as a beyond 3G communication system according to embodiments of the present invention. The communication system 100 offers the 3GPP Long Term Evolution ("LTE") network, i.e. the next-generation network beyond 3G. The communication system 100 includes a core network ('evolved packet core, EPC' of LTE technology), and multiple base stations ('evolved Node B, eNB' of LTE technology) and may include many mobile stations/devices (named 'user equipment' in the LTE technology) such as mobile phones served by the base stations respectively. For simplicity, only a user equipment (UE) 110 is shown in FIG. 1. In order to communicate with the eNB 1 05a for DL data or UL data, it is necessary for the UE 110 to establish a point-to-point bi-directional connection between the Radio Resource Control (RRC) entities on the UE 110 and the evolved UMTS terrestrial radio access network (E-UTRAN), i.e. an RRC connection. When the RRC connection has been established and is still not released, the UE 110 is in an RRC_connected state; otherwise, the UE 110 is in an RRC_idle state.

In order to transmit an RRC connection request message, the UE 110 has to use a random access (RA) procedure, which generally comprises an RA preamble (i.e. an RA request) sent by the UE 110 and followed by an RA response sent by the eNB 1 05a, wherein the RA response is indicative of a grant of UL transmission. In general, RA procedures are classified to be two kinds of procedures:
contention-based RA procedures and non-contention-based RA procedures. A contention-based RA procedure uses a broadcasted RA preamble including a broadcasted RA identifier (5 bits) while a non-contention-based RA procedure uses a dedicated RA preamble including a dedicated RA identifier (5 bits). The phrase 'broadcasted' means that the broadcasted RA identifier is broadcasted by an eNB to all UEs under the coverage of the eNB such as 105a; the phrase 'dedicated' signifies that the dedicated RA identifier is only assigned to a specific UE by the eNB 105a. Each of the UEs including the UE 110 is noticed of available broadcasted RA preambles when each UE starts up.

After start-up of a UE and an RRC connection between the UE and the eNB has been established, even though the UE 110 is in the RRC_connected state, the UE such as 110 may not be synchronized with the eNB such as the eNB 105a since the UE 110 does not communicate with the eNB 1 05a during a period. In this situation, the UE 110 needs to initiate an RA procedure to get synchronization if the UE 110 desires to communicate with the eNB 105 again. For example, if the UE 110 desires to transmit data to the eNB 105a via uplink, the UE 110 has to use a contention-based RA procedure to transmit a broadcasted RA preamble to the UE 105a for UL synchronization. After receiving the broadcasted RA preamble, the eNB 105a responds to the broadcasted RA preamble of the UE 110 by sending an RA response to the UE 110. The eNB 1 05a may receive the same broadcasted RA preamble from another UE and also send an RA response to this UE. However, only one of the two UEs is selected to be capable of communicating with the eNB 105a. In other words, the selected UE can obtain UL synchronization while the other UE cannot be synchronized with the eNB 105a on uplink. Additionally, for example, if the eNB 1 05a desires to transmit data to the UE 110 on downlink, the eNB 1 05a assigns a dedicated RA identifier to the UE 110. After receiving the dedicated RA identifier, the UE 110 uses an RA procedure to send a dedicated RA preamble including the dedicated RA identifier to the eNB 105a for UL synchronization. Under this condition, since no UE except the UE 110 receives the dedicated RA identifier, the dedicated RA preamble transmitted by the UE 110 does not collide with other RA preambles transmitted by other UEs. Accordingly, the dedicated RA identifier is regarded as a system resource of the eNB 105a.

However, the prior art LTE communication system does not clearly specify how a UE and an eNB should operate if the eNB assigns a dedicated RA identifier for the UE almost at the time when the UE transmits a broadcasted RA preamble. It is probable the allocated dedicated RA identifier is not efficiently used by this UE.

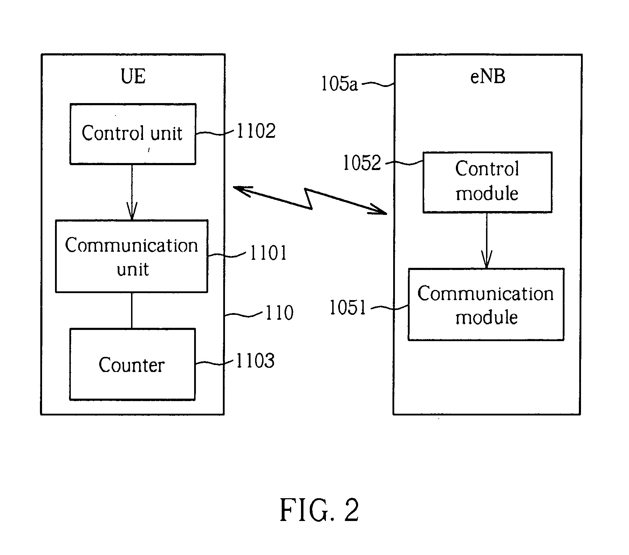

Therefore, in this embodiment, in order to efficiently make use of dedicated RA identifiers, the UE 110 and eNB 105a have the following design. Please refer to FIG. 2. FIG. 2 is a block diagram showing the eNB 1 05a and the UE 110 in FIG. 1. As shown in FIG. 2, the UE 110 comprises a communication unit 1101 for communicating with the eNB 1 05a, a control unit 1102 for controlling the communication unit 1101, and a counter 1103 (named 'PREAMBLE_TRANSMISSION_COUNTER' in the LTE technology) to count a number of transmission time(s) that an RA preamble is transmitted; the eNB 1 05a comprises a communication module 1051 for communicating with the UE 110 and a control module 1052 for controlling the communication module 1051. The control unit 1102 of the UE 110 is used for controlling the communication unit 1101 to transmit a broadcasted/dedicated RA preamble, in order to initiate an RA procedure. The control module 1052 of the eNB 105a is utilized for controlling the communication module 1051 to receive an RA preamble and transfer data.

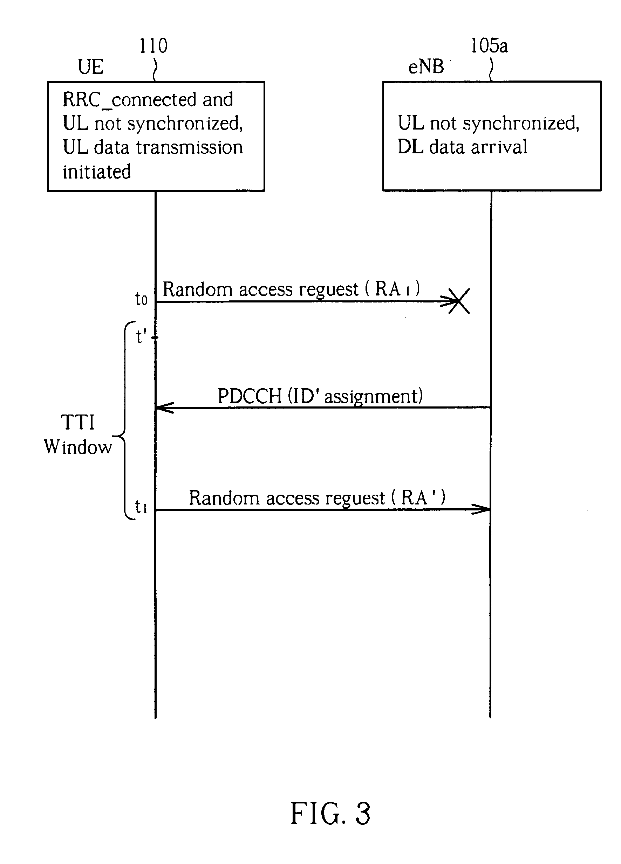

Please refer to FIG. 3. FIG. 3 is a sequential diagram illustrating the interaction between the eNB 1 05a and UE 110 according to the first example of this embodiment. In the first example, it is assumed that the UE 110 is in the RRC_connected state but not synchronized with the eNB 105a on uplink, and the UE 110 and eNB 105a both have data to be transmitted to each other almost simultaneously. Suppose that at time to the UE 110 transmits a broadcasted RA preamble RA₁ including a broadcasted RA identifier ID₁ to the eNB 105a for initiating a first RA procedure. After sending/transmitting the broadcasted RA preamble RA₁, the control unit 1102 of the UE 110 sets a period of a TTI window, which is defined by a beginning time named RA_WINDOW_BEGIN and an end time named RA_WINDOW_END, and initiates monitoring the physical downlink control channel (PDCCH) associated with the random access radio network temporary identity (RA-RNTI) for a RA response at time t', which is determined by the beginning time RA_WINDOW_BEGIN; the phrases "RA_WINDOW_BEGIN" and "RA_WINDOW_END" are specified in 3GPP LTE MAC specification 36.321. The first RA procedure is failed when the period of the TTI window expires. As shown in FIG. 3, the broadcasted RA preamble RA₁ is not received by the eNB 105a, so the eNB 1 05a does not transmit an RA response to the UE 110 correspondingly. In general, the UE 110 has to re-transmit the broadcasted RA preamble RA₁ in a second RA procedure at time t₁, wherein time t₁ is determined by the end time RA_WINDOW_END of the TTI window in 3GPP LTE MAC specification 36.321. However, after the first RA procedure is initiated, the eNB 105a assigns a dedicated RA identifier ID' to the UE 110 via the PDCCH because the eNB 105 has DL data to be transmitted to the UE 110. Once the UE 110 receives the dedicated RA identifier ID', the UE 110 transmits a dedicated RA preamble RA' including the dedicated RA identifier ID' at time t₁ for initiating the second RA procedure, instead of re-transmitting the broadcasted RA preamble RA₁. Therefore, the system resource (i.e. the dedicated RA identifier ID') can be efficiently used. It should be noted that the dedicated RA preamble RA' is transmitted when the first RA procedure is failed. The above-mentioned second RA procedure is used when a radio resource control (RRC) connection with the eNB 105a is established and the UE 110 is not synchronized with the eNB 105a.

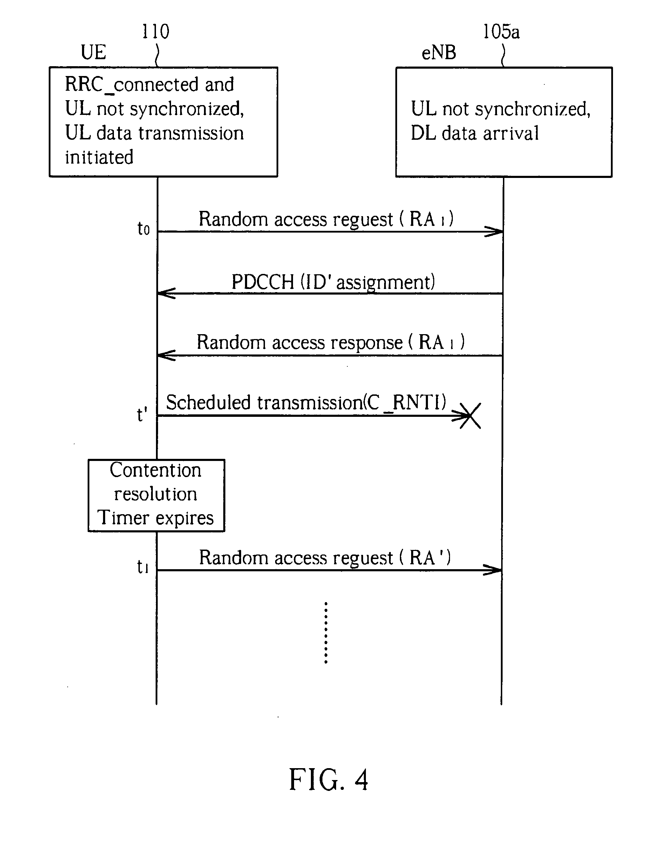

Furthermore, please refer to FIG. 4. FIG. 4 is a sequential diagram illustrating another interaction between the eNB 1 05a and UE 110 according to the first example of this embodiment. As shown in FIG. 4, at time to, the UE 110 uses a first RA procedure to transmit the broadcasted RA preamble RA₁ including the broadcasted RA identifier ID₁ to the eNB 105a. In this scenario, the broadcasted RA preamble RA₁ is successfully received by the eNB 105a, so the eNB 1 05a transmits an RA response corresponding to the broadcasted RA preamble RA₁ to the UE 110. After receiving the RA response, the UE 110 sends a scheduled transmission message including a Cell Radio Network Temporary Identity (C_RNTI) to the eNB 105a and initiates a contention resolution timer at time t', and waits for a response of the eNB 105a. However, as shown in FIG. 4, the scheduled transmission message is not successfully received by the eNB 105a, so the UE 110 waits for expiration of the contention resolution timer and then initiates a second RA procedure for UL synchronization at time t₁. Since the eNB 1 05a assigns a dedicated RA identifier ID' to the UE 110 via the PDCCH during the first RA procedure, the UE 110 is designed to transmit a dedicated RA preamble RA' using the dedicated RA identifier ID' instead of the broadcasted RA identifier ID₁ when initiating the second RA procedure. That is, the system resource (i.e. the dedicated RA identifier ID') assigned to the UE 110 is utilized in the following RA procedure if any transmission about the ongoing RA procedure fails. The dedicated RA preamble RA' is transmitted by the UE 110 for initiating the second RA procedure when the first RA procedure is failed.

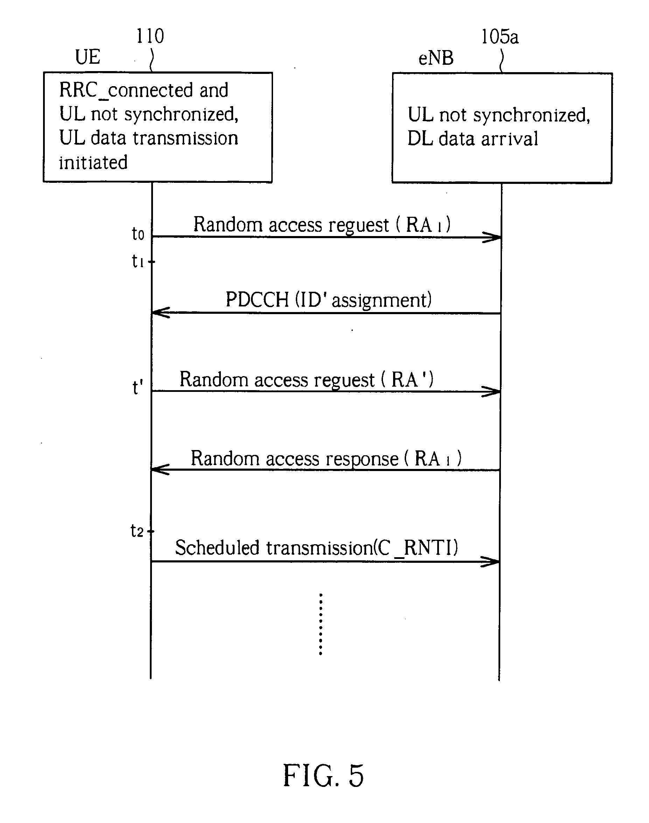

Please refer to FIG. 5. FIG. 5 is a sequential diagram illustrating the interaction between the eNB 105a and UE 110 according to the second example of this embodiment. In the second example, the UE 110 is also in the RRC_connected state but not synchronized with the eNB 1 05a on uplink, and the UE 110 and eNB 1 05a both also have data to be transmitted to each other almost simultaneously. After sending the broadcasted RA preamble RA₁, the control unit 1102 of the UE 110 sets a period of a TTI window, which is defined by a beginning time named RA_WINDOW_BEGIN and an end time named RA_WINDOW_END. The UE 110 of the second example is designed to transmit the dedicated RA preamble RA' to the eNB 105a for immediately initiating a second RA procedure after receiving the assignment message of the dedicated RA identifier ID' coming from the eNB 1 05a. That is, regardless of whether the UE 110 detects failure of the first RA procedure due to that no RA response containing a RA₁ is received within the TTI window from the beginning time t₁ to the end time t₂, the dedicated RA preamble RA' is transmitted to initiate the second RA procedure. That is, the dedicated RA preamble RA' is transmitted when the first RA procedure is ongoing. As shown in FIG. 5, before the UE 110 detects failure of the first RA procedure due to no RA response containing a RA₁ is received in the TTI window from t₁ to t₂, the UE 110 immediately sends the dedicated RA preamble RA' at time t' when receiving the assignment message of the dedicated RA identifier ID'. In other words, whether the first RA procedure succeeds or fails, the second RA procedure is immediately initiated to send the dedicated RA preamble RA' once the dedicated RA identifier ID' is assigned to the UE 110. An advantage of this example is that the eNB 105a can process an RA response with either the broadcasted RA preamble RA₁ or the dedicated RA preamble RA', depending on which one of the preambles is successfully received; the UE 110 has a higher chance to connect to the eNB 1 05a. In this scenario, the eNB 105a sends an RA response associated with the RA preamble RA₁ to the UE 110; however, this is not a limitation of the present invention.

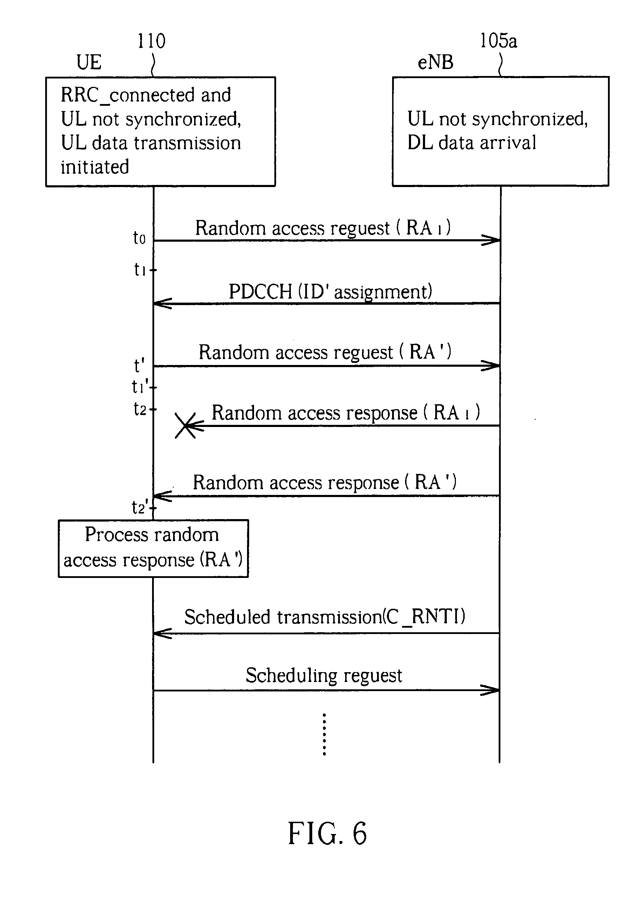

Please refer to FIG. 6. FIG. 6 is a sequential diagram illustrating another interaction between the eNB 105a and UE 110 according to the second example of this embodiment. As shown in FIG. 6, the UE 110 transmits the broadcasted RA preamble RA₁ at the time to for initiating the first RA procedure, and sets a period of a TTI window defined by a beginning time RA_WINDOW_BEGIN (i.e. t₁) and an end time RA_WINDOW_END (t₂) after transmitting the broadcasted RA preamble RA₁. The UE 110 also immediately transmits the dedicated RA preamble RA' at time t' for initiating a second RA procedure after receiving the assignment message of the dedicated RA identifier ID', and sets a period of another TTI window defined by a beginning time RA_WINDOW_BEGIN (i.e. ti') and an end time RA_WINDOW_END (t₂') after sending the dedicated RA preamble RA'. In other words, if the first RA procedure fails, the dedicated RA preamble RA' is transmitted to initiate the second RA procedure before the UE 110 detects failure of the first RA procedure due to that no RA response containing the broadcasted RA preamble RA₁ is received within the TTI window from the beginning time t₁ to the end time t₂. The UE 110 maintains the TTI window from the beginning time t₁' to the end time t₂' for a RA response containing the dedicated RA preamble RA'. The eNB 1 05a is arranged to respond to the broadcasted and dedicated RA preambles RA₁ and RA' by sending RA responses corresponding to RA₁ and RA' respectively. In this scenario, only the RA response corresponding to the dedicated RA preamble RA' is successfully received by the UE 110, so the UE 110 enters a status of processing the RA response corresponding to the dedicated RA preamble RA'. Then, the eNB 105a transmits a control message including a C_RNTI and a DL grant via the PDCCH, and sends DL data (i.e. MAC PDU) to the UE 110. If the broadcasted RA preamble RA₁ is not received within the TTI window from the beginning time t₁ to the end time t₂, the broadcasted RA preamble RA₁ is not considered valid for reception. If a PUCCH for scheduling request (SR) is configured, the UE 110 sends an SR message to the eNB 1 05a after the UE 110 receives the RA response containing the dedicated RA preamble RA', in order to request UL data transmission. Otherwise, the UE 110 initiates a RA procedure to request UL data transmission.

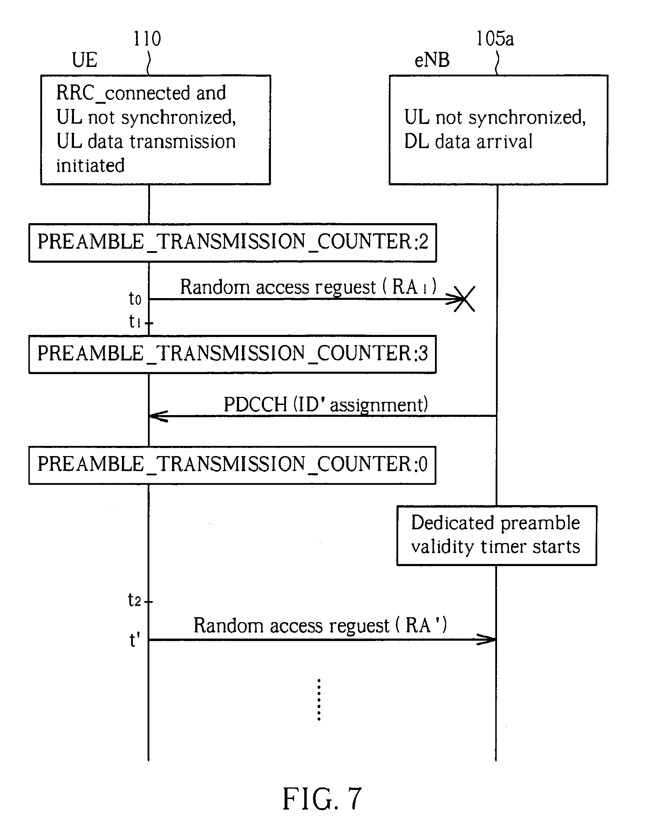

Additionally, as mentioned above, the UE 110 uses the counter 1103 to count a number of time(s) of transmission of a RA preamble. Once the previous RA procedure fails and the number of transmission time(s) reaches a maximum value, the UE decides whether to try to connect to the eNB and then resets the counter to zero. Please refer to FIG. 7. FIG. 7 is a sequential diagram illustrating the interaction between the UE 110 and eNB 1 05a according to a third example of this embodiment. As shown in FIG. 7, the counter 1103 of the UE 110 has reached 2 before the broadcasted RA preamble RA₁ is transmitted at time to, so the counter 1103 counts to 3 after the broadcasted RA preamble RA₁ is transmitted; this RA procedure of transmitting the broadcasted RA preamble RA₁ at time t₀ is named as a first RA procedure herein. After sending the broadcasted RA preamble RA₁, the control unit 1102 sets a period of a TTI window defined by a beginning time t₁ and an end time t₂. In this scenario, the broadcasted RA preamble RA₁ of the first RA procedure is not received by the eNB 105a successfully, and the eNB 105a assigns the dedicated RA identifier ID' to the UE 110 during the first RA procedure. Thus, the UE detects the failure of the first RA procedure due to that no RA response containing the broadcasted RA preamble RA₁ is received within the TTI window from the beginning time t₁ to the end time t₂, and the UE 110 is arranged to transmit the dedicated RA preamble RA' including the dedicated RA identifier ID' to the eNB 105a at time t', in order to initiate a second RA procedure. The UE 110 is designed to reset the counter 1103 to zero in response to a receipt of the assigned dedicated RA identifier ID'; actually, the counter 1103 is reset when the assignment message of the dedicated RA identifier ID' is received before the end time RA_WINDOW_END of the TTI window (i.e. time t₂). That is, the counter 1103 is reset before a failure of the first RA procedure. It is expected that the number of transmission times using the dedicated RA preamble RA' should reach the maximum value if a final result indicates that the UE 110 cannot connect to the eNB 105a, when the dedicated RA identifier ID' is assigned to the UE 110 by the eNB 105a. Usually, when assigning the dedicated RA identifier ID' to the UE 110, the eNB 105a starts a dedicated preamble validity timer. The eNB 1 05a expects that the UE 110 should try to connect to the eNB 1 05a with the dedicated RA preamble RA' until the dedicated preamble validity timer expires. Therefore, the control unit 1102 of the UE 110 resets the counter 1103 once a dedicated RA identifier is received. This can avoid a UE transmitting a dedicated RA preamble at a time (for initiating an RA procedure) and then deciding to not try to connect with an eNB if this RA procedure fails. For instance, suppose that the maximum value is set as 4. If the UE 110 did not reset the counter 1103 when receiving the dedicated RA identifier ID' and the second RA procedure failed, the UE 110 might not try to initiate another RA procedure for re-transmitting the dedicated RA preamble RA' to the eNB 105a.

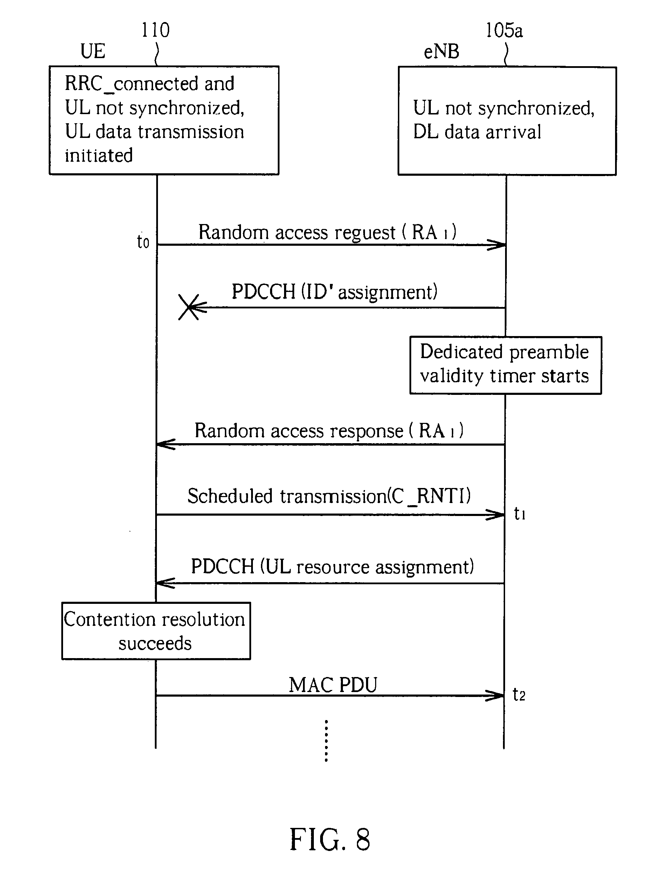

In addition, in this embodiment, the control module 1052 of the eNB 1 05a can appropriately stop the dedicated preamble validity timer and release the dedicated RA identifier ID' allocated to the UE 110 under certain conditions. Please refer to FIG. 8 FIG. 8 is a sequential diagram illustrating the interaction between the UE 110 and eNB 105a according to a fourth example of this embodiment. As shown in FIG. 8, the UE 110 transmits a broadcasted RA preamble RA₁ to the eNB 1 05a at time to for initiating a first RA procedure, and the eNB 1 05a assigns a dedicated RA identifier ID' to the UE 110 during the first RA procedure; however, the assignment message of the dedicated RA identifier ID' is not successfully received by the UE 110. When assigning the dedicated RA identifier ID' to the UE 110 via the PDCCH, the eNB 1 05a starts the dedicated preamble validity timer. In the following, the eNB 105a replies to the broadcasted RA preamble RA₁ by sending an RA response corresponding to RA₁ to the UE 110, and then the UE 110 transmits a scheduled transmission message including the C_RNTI to the eNB 105a after receiving this RA response. The eNB 1 05a transmits a UL resource assignment message to the UE 110 via the PDCCH once the scheduled transmission message is received. When the UE 110 successfully receives the UL resource assignment message, the contention resolution procedure succeeds and then the UE 110 transmits UL data such as medium access control protocol data unit(s) (MAC PDU) to the eNB 1 05a. In this scenario, the eNB 105a cannot be actively aware that the assignment message of the allocated dedicated RA identifier ID' is not successfully received by the UE 110. The eNB 1 05a can be designed to release the system resource (i.e. the dedicated RA identifier ID') early and may allocate the system resource to another UE if the eNB 105a knows that the synchronization between the UE 110 and eNB 105a is established. In the fourth example, the eNB 105a is arranged to stop the dedicated preamble validity timer and release the dedicated RA identifier ID' when successfully receiving a signal from the UE 110. For example, when successfully receiving the scheduled transmission message including the C_RNTI transmitted by the UE 110 at time t₁, the eNB 105a can be aware that the RA procedure associated with RA₁ succeeds and the synchronization between the UE 110 and the eNB 105a is established. Accordingly, the eNB 1 05a can stop the dedicated preamble validity timer and release the dedicated RA identifier ID', when receiving the scheduled transmission message sent from the UE 110. In addition, the eNB 105a (also?) can be arranged to stop the dedicated preamble validity timer and.release the dedicated RA identifier ID', when successfully receiving a MAC PDU sent from the UE 110 at time t₂. This MAC PDU can be the first MAC PDU or the other MAC PDU received by the eNB 1 05a after the C_RNTI is received. In other words, the control module 1052 of the eNB 1 05a releases the dedicated RA preamble associated with the dedicated RA identifier ID' when the C_RNTI or a MAC PDU from the UE 110 is received by the communication module 1051; the MAC PDU is received later than the receipt of the C_RNTI. The modifications obey the spirit of the present invention.

Moreover, according to an accepted agreement in the 3GPP meeting, when a UE uses a contention preamble (i.e. an RA preamble) and has an C_RNTI, and the random access channel (RACH) is not triggered by a PDCCH order, only a PDCCH information with the C_RNTI containing a UL grant shall be considered as indicating successful contention resolution. That is to say, when the UE uses an RA preamble to perform an RA procedure for sending UL data to an eNB, a contention resolution is considered to be successful only when the UE receives a UL grant from the eNB via the PDCCH. If the UE does not receive the UL grant before the contention resolution timer expires, then the contention resolution fails. Thereafter, the UE may initiate an RA procedure once again to try to transmit UL data; however, the UL data transmission has been delayed.

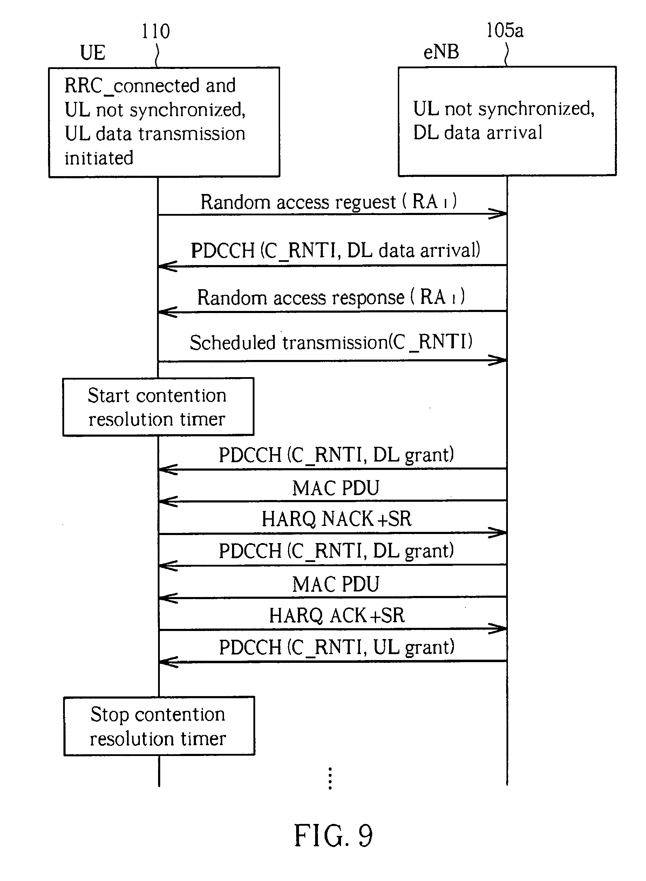

In order to solve this problem, the UE 110 of the above-mentioned embodiment has an additional design. Please refer to FIG. 9, which illustrates a sequential diagram showing an interaction between the UE 110 and the eNB 1 05a shown in FIG. 2 according to a fifth example of this embodiment. As shown in FIG. 9, the UE 110 is in the RRC_connected state but not synchronized with the eNB 1 05a on uplink; the UE 110 has UL data to be transmitted the eNB 1 05a. DL data arrival occurs at the eNB 105a almost at the same time. In this case, since the eNB 105a does not assign any dedicated RA identifier to the UE 110, the control unit 1102 of the UE 110 controls the communication unit 1101 to transmit the broadcasted RA preamble RA₁ to the eNB 1 05a for initiating a first RA procedure to achieve the UL data transmission. For the eNB 105a, the RA preamble RA₁, however, may be considered an RA preamble regarding DL data transmission but not for the UL data transmission. Therefore, the communication unit 1101 of the UE 110 transmits a scheduled transmission message including the C_RNTI to the UE 110 when an RA response from the eNB 105a is received and then starts a contention resolution timer. The eNB 105a may send control messages including the C_RNTI and a DL grant via the PDCCH and then sends DL data (i.e. MAC PDU) to the UE 110. Once the UE 110 receives the DL data, the UE 110 may acknowledge a Hybrid ARQ acknowledgement (ACK)/ negative acknowledgement (NACK) message to the eNB 105a via the physical uplink control channel (PUCCH). In addition to the Hybrid ARQ ACK/NACK message, if the PUCCH for SR is configured, the control unit 1102 of the UE 110 is arranged to control the communication unit 1101 to transmit an SR message from the UE 110 to the eNB 105a via the PUCCH at the same time, in order to notify the eNB 105a that the UE 110 has UL data to be transmitted (i.e. the RA preamble is used for UL data transmission). In other words, the UE 110 transmits the SR message to the eNB 105a before the contention resolution timer expires, and the SR message is transmitted with an ACK message or a NACK message. It should be noted that the PUCCH is available in this case since the UL synchronization between the UE 110 and eNB 105a is established after the C_RNTI via PDCCH is successfully received by the UE 110. Additionally, in this embodiment, the UE 110 is designed to keep transmitting the SR message to the eNB 1 05a when the contention resolution timer is running. That is, the UE 110 sends the SR message as long as the UE 110 itself desires to acknowledge the Hybrid ARQ ACK/NACK to the eNB 105a and the contention resolution timer does not expire yet; however, this design is not intended to be a limitation of the present invention. In other words, the UE 110 in other embodiments can be arranged to send the SR message at a time or at many times, to notify the eNB 105 that it has data to be transmitted. Please note that any modification of sending a message to notify the eNB 1 05a when the contention resolution timer is running should obey the spirit of the present invention. Note that if the UE 110 was not arranged to send the SR message, the eNB 105a may be unable to know that the RA preamble RA₁ is used for UL data transmission but not for DL data transmission before the contention resolution timer expires.

Furthermore, at a point of view of the eNB 1 05a, an alternative design to solve the above problem is proposed for the eNB 105a to distinguish an RA procedure for UL data transmission or an RA procedure for DL data transmission. The eNB 1 05a considers that an RA preamble is used for the UL data transmission if the RA preamble is received by the eNB 105a within n subframes after the eNB 1 05a sends the control message including the C_RNTI and a DL data arrival via the PDCCH. That is, the control module 1052 of the eNB 1 05a is arranged to determine whether the RA preamble is for the UL data transmission. Once the RA preamble is considered as an RA preamble for the UL data transmission, the control module 1051 is arranged to control the communication module 1051 to transmit a control message including a UL grant from the eNB 1 05a to the UE 110 via the PDCCH. Therefore, the UL data transmission will not be delayed. The number n is determined by a sum of the DL transmission time via the PDCCH, the processing time of the UE 110, the delay time due to the physical random access channel (PRACH) allocation, and the UL transmission time via the random access channel (RACH). The delay time due to the PRACH allocation is indicative of that the UE 110 may still wait for a time to send an RA preamble after receiving the control message including a DL data arrival via the PDCCH. This is because the eNB 1 05a specifies that a UE such as 110 can send an RA preamble to perform an RA procedure only at a particular subframe in 10 mini-seconds. Note that the example of 10 mini-seconds is only used for illustrative purposes, and is not meant to be a limitation of the present invention.

For completeness, various aspects of the invention are set out in the following numbered clauses:
1. A method utilized in a mobile device, the method comprising:
   transmitting a broadcasted random access (RA) preamble to a base station for initiating a first RA procedure;
   receiving a dedicated RA preamble from the base station after the first RA procedure is initiated; and
   transmitting the dedicated RA preamble to the base station for initiating a second RA procedure.
2. The method of clause 1, wherein the dedicated RA preamble is transmitted when the first RA procedure is failed or ongoing.
3. The method of clause 2, further comprising:
   setting a period after the broadcasted RA preamble is transmitted,
   wherein the first RA procedure is failed when the period expires.
4. The method of clause 1, further comprising:
   resetting a counter used to count a number of times of the transmission of RA preamble when the dedicated RA preamble is received.
5. The method of clause 2, further comprising:
   resetting a counter used to count a number of times of the transmission of RA preamble when the dedicated RA preamble is received;
   wherein the counter is reset before a failure of the first RA procedure.
6. The method of clause 1, wherein the second RA procedure is used when a radio resource control (RRC) connection with the base station is established and the mobile device is not synchronized with the base station.
7. A method utilized in a base station, the method comprising:
   receiving a broadcasted random access (RA) preamble used to initiate an RA procedure from a mobile device;
   assigning a dedicated RA preamble to the mobile device;
   transmitting an RA response corresponding to the broadcasted RA preamble to the mobile device and then receiving a scheduled transmission including a cell radio network temporary identity (C_RNTI) from the mobile device; and
   releasing the dedicated RA preamble when the C_RNTI or a media access control protocol data unit (MAC PDU) from the mobile device is received.
8. The method of clause 7, wherein the MAC PDU is received later than the receipt of the C_RNTI.
9. A method utilized in a mobile device, the method comprising:
   transmitting a random access (RA) preamble to a base station;
   receiving a control message including downlink (DL) data arrival from the base station;
   transmitting a scheduled transmission message to the base station when an RA response from the base station is received and then starting a contention resolution timer; and
   before the contention resolution timer expires, transmitting a scheduling request message to the base station.
10. The method of clause 9, wherein the scheduling request message is used to notify that the RA preamble is used for uplink (UL) data transmission.
11. The method of clause 9, wherein the step of transmitting the scheduling request message comprises:
   transmitting the scheduling request message to the base station with an acknowledgement (ACK) or a negative acknowledgement (NACK) transmitted to the base station.
12. The method of clause 11, wherein the scheduling request message is transmitted with the ACK or the NACK when the contention resolution timer does not expire.
13. A method utilized in a base station, the method comprising:
   determining whether an random access (RA) preamble is used for uplink (UL) data transmission; and
   sending a control message including a UL grant to the mobile device when the RA preamble is considered to be used for UL data transmission.
14. The method of clause 13, wherein when the RA preamble is received within a number of subframes after the control message including the DL data arrival is sent, the RA preamble is used for UL data transmission.
15. The method of clause 14, wherein the number is determined according to a DL transmission time via a physical downlink control channel (PDCCH), a processing time of the mobile device, a delay time due to a physical random access channel (PRACH) allocation, and a UL transmission time via a random access channel (RACH).
16. A mobile device, comprising:
   a communication unit, for communicating with a base station; and
   a control unit, for controlling the communication unit;
   wherein the control unit controls the communication unit to transmit a broadcasted random access (RA) preamble to a base station for initiating a first RA procedure; the communication unit receives a dedicated RA preamble from the base station after the first RA procedure is initiated; and the control unit controls the communication unit to transmit the dedicated RA preamble to the base station for initiating a second RA procedure.
17. The mobile device of clause 16, wherein the communication unit transmits the dedicated RA preamble when the first RA procedure is failed or ongoing.
18. The mobile device of clause 17, wherein the control unit further sets a period after the broadcasted RA preamble is transmitted; and the first RA procedure is failed when the period expires.
19. The mobile device of clause 16, further comprising:
   a counter, for counting a number of times of the transmission of RA preamble;
   wherein the control unit resets the counter when the dedicated RA preamble is received.
20. The mobile device of clause 17, further comprising:
   a counter, for counting a number of times of the transmission of RA preamble;
   wherein the control unit resets the counter before a failure of the first RA procedure when the dedicated RA preamble is received by the communication unit.
21. The mobile device of clause 16, wherein the second RA procedure is used when a radio resource control (RRC) connection with the base station is established and the communication unit is not synchronized with the base station.
22. A base station, comprising:
   a communication module, for communicating with a mobile device; and
   a control module, for controlling the communication module;
   wherein the communication module receives a broadcasted random access (RA) preamble used to initiate an RA procedure from the mobile device; the control module controls the communication module to assign a dedicated RA preamble to the mobile device; the communication module transmits an RA response corresponding to the broadcasted RA preamble to the mobile device and then receives a scheduled transmission including a cell radio network temporary identity (C_RNTI) from the mobile device; and the control module releases the dedicated RA preamble when the C_RNTI or a media access control protocol data unit (MAC PDU) from the mobile device is received by the communication module.
23. The base station of clause 22, wherein the MAC PDU is received later than the receipt of the C_RNTI.
24. A mobile device, comprising:
   a communication unit, for communicating with a base station; and
   a control unit, for controlling the communication unit;
   wherein the control unit controls the communication unit to transmit an random access (RA) preamble to the base station; the communication unit receives a control message including downlink (DL) data arrival from the base station; the control unit controls the communication unit to transmit a scheduled transmission message to the base station when an RA response from the base station is received and then starts a contention resolution timer; and the control unit controls the communication unit to transmit a scheduling request message to the base station before the contention resolution timer expires.
25. The mobile device of clause 24, wherein the scheduling request message is used to notify that the RA preamble is used for uplink (UL) data transmission.
26. The mobile device of clause 24, wherein the communication unit transmits the scheduling request message to the base station with an acknowledgement (ACK) or a negative acknowledgement (NACK) transmitted to the base station.
27. The mobile device of clause 26, wherein the scheduling request message is transmitted with the ACK or the NACK when the contention resolution timer does not expire.
28. A base station, comprising:
   a communication module, for communicating with a mobile device; and
   a control module, for controlling the communication module;
   wherein the control module determines whether a random access (RA) preamble is used for uplink (UL) data transmission; and the control unit controls the communication unit to send a control message including a UL grant to the mobile device when the RA preamble is considered to be used for UL data transmission.
29. The base station of clause 28, wherein the RA preamble is used for UL data transmission when the RA preamble is received within a number of subframes after the control message including the DL data arrival is sent.
30. The base station of clause 29, wherein the number is determined according to a DL transmission time via a physical downlink control channel (PDCCH), a processing time of the mobile device, a delay time due to a physical random access channel (PRACH) allocation, and a UL transmission time via a random access channel (RACH).

## Claims

1. A method utilized in a mobile device (110), **characterized by**:
transmitting a broadcasted random access (RA) preamble to a base station (105a) for initiating a first RA procedure;
receiving a dedicated RA preamble from the base station (105a) after the first RA procedure is initiated; and
transmitting the dedicated RA preamble to the base station (105a) for initiating a second RA procedure.

2. The method of claim 1, **characterized in that** the method further comprises:
resetting a counter (1103) used to count a number of times of the transmission of RA preamble when the dedicated RA preamble is received.

3. A method utilized in a base station (105a), **characterized by**:
receiving a broadcasted random access (RA) preamble used to initiate an RA procedure from a mobile device (110);
assigning a dedicated RA preamble to the mobile device (110);
transmitting an RA response corresponding to the broadcasted RA preamble to the mobile device (110) and then receiving a scheduled transmission including a cell radio network temporary identity (C_RNTI) from the mobile device (110); and
releasing the dedicated RA preamble when the C_RNTI or a media access control protocol data unit (MAC PDU) from the mobile device (110) is received.

4. A method utilized in a mobile device (110), **characterized by**:
transmitting a random access (RA) preamble to a base station (105a);
receiving a control message including downlink (DL) data arrival from the base station (105a);
transmitting a scheduled transmission message to the base station (105a) when an RA response from the base station (105a) is received and then starting a contention resolution timer; and
before the contention resolution timer expires, transmitting a scheduling request message to the base station (105a).

5. The method of claim 4, **characterized in that** the scheduling request message is used to notify that the RA preamble is used for uplink (UL) data transmission, and the step of transmitting the scheduling request message comprises:
transmitting the scheduling request message to the base station with an acknowledgement (ACK) or a negative acknowledgement (NACK) transmitted to the base station when the contention resolution timer does not expire.

6. A method utilized in a base station (105a), **characterized by**:
determining whether an random access (RA) preamble is used for uplink (UL) data transmission; and
sending a control message including a UL grant to the mobile device (110) when the RA preamble is considered to be used for UL data transmission.

7. A mobile device (110), comprising:
a communication unit (1101), for communicating with a base station (1 05a); and
a control unit (1102), for controlling the communication unit (1101);
**characterized by**:
wherein the control unit (1102) controls the communication unit (1101) to transmit a broadcasted random access (RA) preamble to a base station (1 05a) for initiating a first RA procedure; the communication unit (1101) receives a dedicated RA preamble from the base station (1 05a) after the first RA procedure is initiated; and the control unit (1102) controls the communication unit (1101) to transmit the dedicated RA preamble to the base station (105a) for initiating a second RA procedure.

8. The method of claim 1 or the mobile device (110) of claim 7, **characterized in that** the dedicated RA preamble is transmitted when the first RA procedure is failed or ongoing.

9. The mobile device (110) of claim 7 or 8, **characterized by**:
a counter (1103), for counting a number of times of the transmission of RA preamble;
wherein the control unit (1102) resets the counter (1103) when the dedicated RA preamble is received.

10. The method of claim 1 or the mobile device (110) of claim 7, **characterized in that** the second RA procedure is used when a radio resource control (RRC) connection with the base station (1 05a) is established and the mobile device (110) of claim 1 or the communication unit (1101) of claim 7 is not synchronized with the base station (105a).

11. A base station (1 05a), comprising:
a communication module (1051), for communicating with a mobile device (110); and
a control module (1052), for controlling the communication module (1051);
**characterized by**:
wherein the communication module (1051) receives a broadcasted random access (RA) preamble used to initiate an RA procedure from the mobile device (110); the control module (1052) controls the communication module (1051) to assign a dedicated RA preamble to the mobile device (110); the communication module (1051) transmits an RA response corresponding to the broadcasted RA preamble to the mobile device (110) and then receives a scheduled transmission including a cell radio network temporary identity (C_RNTI) from the mobile device (110); and the control module (1052) releases the dedicated RA preamble when the C_RNTI or a media access control protocol data unit (MAC PDU) from the mobile device (110) is received by the communication module (1051).

12. A mobile device (110), comprising:
a communication unit (1101), for communicating with a base station (105a); and
a control unit (1102), for controlling the communication unit (1101);
**characterized by**:
wherein the control unit (1102) controls the communication unit (1101) to transmit an random access (RA) preamble to the base station (1 05a); the communication unit (1101) receives a control message including downlink (DL) data arrival from the base station (105a); the control unit (1102) controls the communication unit (1101) to transmit a scheduled transmission message to the base station (1 05a) when an RA response from the base station (105a) is received and then starts a contention resolution timer; and the control unit (1102) controls the communication unit (1101) to transmit a scheduling request message to the base station (105a) before the contention resolution timer expires.

13. The mobile device (110) of claim 12, **characterized in that** the scheduling request message is used to notify that the RA preamble is used for uplink (UL) data transmission; and the communication unit (1101) transmits the scheduling request message to the base station (105a) with an acknowledgement (ACK) or a negative acknowledgement (NACK) transmitted to the base station (1 05a).

14. The mobile device (110) of claim 13, **characterized in that** the scheduling request message is transmitted with the ACK or the NACK when the contention resolution timer does not expire.

15. A base station (1 05a), comprising:
a communication module (1051), for communicating with a mobile device (110); and
a control module (1052), for controlling the communication module (1051);
**characterized by**:
wherein the control module (1052) determines whether a random access (RA) preamble is used for uplink (UL) data transmission; and the control module (1052) controls the communication module (1051) to send a control message including a UL grant to the mobile device (110) when the RA preamble is considered to be used for UL data transmission.

16. The method of claim 6 or the base station (1 05a) of claim 15, **characterized in that** the RA preamble is used for UL data transmission when the RA preamble is received within a number of subframes after the control message including the DL data arrival is sent.

17. The method of claim 16 or the base station (105a) of claim 16, **characterized in that** the number is determined according to a DL transmission time via a physical downlink control channel (PDCCH), a processing time of the mobile device (110), a delay time due to a physical random access channel (PRACH) allocation, and a UL transmission time via a random access channel (RACH).
